# EUROPÄISCHE PATENTSCHRIFT

(11) **EP 2 490 420 B1**
(45) Veröffentlichungstag und Bekanntmachung des Hinweises auf die Patenterteilung: **10.10.2018**
(21) Anmeldenummer: 11155038.0
(22) Anmeldetag: 18.02.2011
(51) Int. Cl.: H04M 1/725, H04M 1/60

(54) **Simultane Anmeldung und Assoziation eines Kommunikationsgeräts**
Simultaneous registration and association of a communication device
Alerte et association simultanées d'un appareil de télécommunication

(43) Veröffentlichungstag der Anmeldung: 22.08.2012
(60) Teilanmeldung: 13155980.9
(73) Patentinhaber: Gigaset Communications GmbH, 40549 Düsseldorf (DE)
(72) Erfinder: Mari, Andreas, 81829, München (DE); Siegel, Thorsten, 48249, Dülmen (DE); Hekers, Burkhard, 46562, Voerde (DE)
(74) Vertreter: Michalski Hüttermann & Partner Patentanwälte mbB

(56) Entgegenhaltungen:
- US-A1- 2005 197 061
- US-A1- 2006 128 376

## Beschreibung

Die Erfindung betrifft ein Verfahren zur simultanen Anmeldung und Assoziation (Zuordnung) einer Kommunikationsvorrichtung, beispielsweise einem Headset, einer Freisprecheinrichtung, einem Mobilteil oder ähnlichem, mit einem Kommunikationsgerät, insbesondere einem Mobilteil eines Schnurlostelefons, über eine Schnittstelle, beispielsweise die DECT- (Digital Enhanced Cordless Telecommunications) Schnittstelle, einer Sende- und Empfangsstation, vorzugsweise einer Basisstation eines Telefons, insbesondere eines Schnurlostelefons. Die Erfindung ist vorzugsweise für Telefonsysteme, insbesondere für Schnurlostelefone, mit mindestens einem Mobilteil und mindestens einer Basisstation einsetzbar. Ferner betrifft die Erfindung eine Kommunikationsvorrichtung, beispielsweise einem Headset, einer Freisprecheinrichtung, einem Mobilteil oder ähnlichem, welche sich über eine Schnittstelle bei einer Sende- und Empfangsstation anmeldet und über die Sende- und Empfangsstation mit einem bereits an der Sende- und Empfangsstation angemeldeten Kommunikationsgerät verbunden und assoziiert wird.

Im Stand der Technik sind viele Möglichkeiten bekannt, um ein Gespräch von einem Kommunikationsgerät, beispielsweise einem Mobilteil eines Schnurlostelefons, an eine Kommunikationsvorrichtung, beispielsweise ein weiteres Mobilteil, ein Headset, eine Freisprecheinrichtung oder ähnlichem, zu übertragen. Dies ermöglicht es dem Benutzer neben dem Gespräch andere Tätigkeiten, wie beispielsweise Notizen machen oder Nachschlagen, auszuführen oder mehreren Personen an einem Gespräch, beispielsweise im Falle einer Freisprechanlage eine Telefonkonferenz, teilhaben zu lassen oder Gespräche an Personen zu übergeben ohne eine Wegstrecke zurückzulegen. Meist erfolgt die Übergabe des Gesprächs von dem Kommunikationsgerät an die Kommunikationsvorrichtung durch Anrufen der Kommunikationsvorrichtung durch das Kommunikationsgerät. Dabei wird der Gesprächspartner üblicherweise in eine Warteschleife überführt und wartet darauf, dass das Gespräch von dem Kommunikationsgerät an die Kommunikationsvorrichtung übergeben worden ist. Die Kommunikationsvorrichtung kann dabei direkt mit dem Kommunikationsgerät über eine Funkverbindung, wie Bluetooth oder Infrarot, oder über Kabel verbunden sein.

Bei einer Funkverbindung, beispielsweise über Bluetooth oder Infrarot, werden sowohl die Kommunikationsvorrichtung als auch das Kommunikationsgerät in einen Anmeldestatus versetzt. Die Kommunikationsvorrichtung sendet dabei ein zuordnungsbares Anmeldesignal an das Kommunikationsgerät und das Kommunikationsgerät sendet ein zuordnungsbares Anmeldesignal an die Kommunikationsvorrichtung. Sobald die Verbindung zwischen dem Kommunikationsvorrichtung und dem Kommunikationsgerät am jeweiligen Gerät bestätigt wird, sind die Kommunikationsvorrichtung und das Kommunikationsgerät miteinander verbunden. Die Verbindungsinformationen werden dabei sowohl in der Kommunikationsvorrichtung als auch im Kommunikationsgerät gespeichert. Es werden also sowohl an der Kommunikationsvorrichtung als auch am Kommunikationsgerät zusätzliche Bauteile, wie Sende- und Empfangsschnittstellen oder einen Speicher, benötigt, was zu höheren Produktionskosten und zu einem erhöhten Fertigungsaufwand führt. Desweiteren hat eine Funkverbindung über Bluetooth oder Infrarot nicht die Reichweite einer DECT-Verbindung.

Bei einem Mobilteil als Kommunikationsvorrichtung wird die Kommunikationsvorrichtung direkt mit der Sende- und Empfangsstation assoziiert, und jedes Kommunikationsgerät, welches an der Sende- und Empfangsstation angemeldet ist, kann mit der Kommunikationsvorrichtung kommunizieren. Desweiteren kann ein Gespräch nur übergeben werden, so dass auch bei einem Mobilteil als Kommunikationsvorrichtung der Gesprächspartner in einer Warteschleife warten muss.

Bei Freisprechanlagen des Stands der Technik, sind diese meist in dem Kommunikationsgerät oder in der Sende- und Empfangsstation integriert und/oder fest verbunden. Das Kommunikationsgerät hat auch während der Übertragung des Gesprächs über die Freisprechanlage noch Zugriff auf das Gespräch.

Die Patentschrift US 2006/128376 A1 beschreibt ein Kommunikationssystem bei dem ein Kommunikationsgerät, beispielsweise ein Mobiltelefon, mit Hilfe eines Adapters an eine Sende- und Empfangsstation angemeldet werden kann, um mit Hilfe des Mobiltelefons über die Sende- und Empfangsstation zu telefonieren.

Die Patentschrift US 2005/197061 A1 beschreibt ein Kommunikationssystem bei dem ein elektronisches Kommunikationsgerät, beispielsweise ein Mobiltelefon Bluetooth über eine Sende- und Empfangsstation telefonieren kann.

Es ist daher Aufgabe der Erfindung, die oben genannten Nachteile zu lösen und eine einfache Möglichkeit zum simultanen Anmelden und Assoziieren (Zuordnen) einer Kommunikationsvorrichtung mit einem Kommunikationsgerät bereit zu stellen, die möglichst keine weiteren zusätzlichen Sende- und Empfangsschnittstellen oder Bauteile erfordert, und bei der die Kommunikationsvorrichtung das Gespräch aktiv von dem Kommunikationsgerät übernehmen kann ohne dass eine Übergabe bestätigt werden muss.

Diese Aufgabe wird durch ein Verfahren mit den Merkmalen des Anspruchs 1 und durch ein System mit den Merkmalen des Anspruchs 10 gelöst.

Erfindungsgemäß wird ein Verfahren zur simultanen Anmeldung und Assoziation (Zuordnen) einer Kommunikationsvorrichtung, beispielsweise einem Headset, einer Freisprecheinrichtung, einem Mobilteil oder ähnlichem, mit einem Kommunikationsgerät, insbesondere einem Mobilteil eines Schnurlostelefons, über eine Schnittstelle, beispielsweise eine DECT-Schnittstelle, an einer Sende- und Empfangsstation, vorzugsweise eine Basisstation eines Schnurlostelefons, verwendet. Die Sende- und Empfangsstation ist bereits mit mindestens einem Kommunikationsgerät verbunden, und kann bereits mit mindestens einer Kommunikationsvorrichtung verbunden sein. Die Kommunikationsvorrichtung und die Sende- und Empfangsstation können jeweils in die Bereitschaft zum gegenseitigen Anmelden, die sogenannte Anmeldebereitschaft, versetzt werden. Die Sende-und Empfangsstation kann über die Schnittstelle die Anmeldebereitschaft der Kommunikationsvorrichtung empfangen, wobei die Anmeldebereitschaft als ein Anmeldesignal ausgebildet ist. Die Sende- und Empfangsstation übermittelt über eine Schnittstelle, beispielsweise die DECT-Schnittstelle, an das mindestens eine Kommunikationsgerät oder an die mindestens eine Kommunikationsvorrichtung eine Nachrichteninformation, dass ein Assoziationssignal einer zur Assoziation zur Verfügung stehenden Kommunikationsvorrichtung oder eines zur Assoziation zur Verfügung stehendes Kommunikationsgerätes empfangen worden ist, um die zur Assoziation zur Verfügung stehende Kommunikationsvorrichtung oder das zur Assoziation zur Verfügung stehende Kommunikationsgerät einem Kommunikationsgerät oder einer Kommunikationsvorrichtung zuzuordnen. Die Nachrichteninformation ist eine Signalisierung der Basis an die Kommunikationsgeräte oder Kommunikationsvorrichtungen mit der Aufforderung eine mögliche Assoziation zu Bestätigen. Das Assoziationssignal umfasst ein Signal, welches den Kommunikationsgeräten oder den möglicherweise Kommunikationsvorrichtungen mitteilt, dass ein zur Assoziation zur Verfügung stehendes Kommunikationsgerät oder eine zur Assoziation zur Verfügung stehende Kommunikationsvorrichtung für eine Assoziation zur Verfügung steht. Somit ist das Assoziationssignal ein Informationselement, welche als Auslöser der Nachrichteninformation bzgl. der Assoziation dient, und kann durch die Geräteklasse, eine Bedienprozedur oder sonstige Signalisierungen hervorgerufen werden. Eines von dem mindestens einen Kommunikationsgerät oder der mindestens einen Kommunikationsvorrichtung bestätigt die Assoziation mit der zur Assoziation zur Verfügung stehenden Kommunikationsvorrichtung oder dem zur Assoziation zur Verfügung stehenden Kommunikationsgerät durch Übermittlung eines Assoziation-Bestätigungssignals an die Sende-und Empfangsstation. Das Assoziations-Bestätigungssignal ist ein Signal, welches ein Kommunikationsgerät oder eine Kommunikationsvorrichtung aussendet, um die Assoziationsaufforderung, welche durch die Sende- und Empfangsstation ausgesendet wird, zu bestätigen. Die Sende- und Empfangsstation empfängt das Assoziations-Bestätigungssignal des einen des mindestens einen Kommunikationsgerätes oder der mindestens einen Kommunikationsvorrichtung. Die Sende- und Empfangsstation speichert intern die Assoziation der zur Assoziation zur Verfügung stehenden Kommunikationsvorrichtung oder des zur Assoziation zur Verfügung stehenden Kommunikationsgerätes mit dem einen des mindestens einen Kommunikationsgerätes oder mit dem einen der mindestens einen Kommunikationsvorrichtung. Die Sende- und Empfangsstation teilt, wenn vorhanden, den anderen des mindestens einen Kommunikationsgerätes oder den anderen der mindestens einen Kommunikationsvorrichtung mit, dass die zur Assoziation zur Verfügung stehende Kommunikationsvorrichtung oder das zur Assoziation zur Verfügung stehende Kommunikationsgerät mit dem einen des mindestens einen Kommunikationsgerätes oder der einen der mindestens einen Kommunikationsvorrichtung assoziiert ist, und die Assoziationsaufforderung beendet ist. Ferner ist es möglich, wenn kein Kommunikationsgerät oder keine Kommunikationsvorrichtung ein Assoziations-Bestätigungssignal an die Sende- und Empfangsstation übermittelt, um mit dem zur Assoziation zur Verfügung stehenden Kommunikationsgerät oder der zur Assoziation zur Verfügung stehenden Kommunikationsvorrichtung assoziiert zu werden, dass nach Ablauf einer vorgegebenen Zeit die Sende- und Empfangsstation die Aufforderung zur Assoziation abbricht.

Weiter erfindungsgemäß weist die mindestens eine Nachrichteninformation ein Assoziationssignal, beispielsweise eine die DECT-Signalisierung wie z.B. die DECT IWU, die DECT I-PUI ESC to PROPRIETARY usw, für eine Kommunikationsvorrichtung oder ein Kommunikationsgerät auf, welches durch die jeweilige Anmeldung an der Sende- und Empfangsstation ausgelöst wird. Durch die Anmeldung an der Sende- und Empfangsstation, verarbeitet die Sende- und Empfangsstation das Anmeldesignal in ein Assoziationssignal um, um dem mindestens einen Kommunikationsgerät und/oder der mindestens einen Kommunikationsvorrichtung mitzuteilen, dass es möglich ist, sich mit dem zur Assoziation zur Verfügung stehenden Kommunikationsgerät oder der zur Assoziation zur Verfügung stehenden Kommunikationsvorrichtung zu assoziieren.

Vorteilhafterweise, ist es möglich, dass bei dem erfindungsgemäßen Verfahren die Sende-und Empfangsstation die Nachrichteninformation intern selbst erzeugt. Dies ist vorteilhaft, wenn kein neues Kommunikationsgerät oder keine neue Kommunikationsvorrichtung an der Sende- und Empfangsstation angemeldet wird, beispielsweise ein Kommunikationsgerät oder eine Kommunikationsvorrichtung von der Sende- und Empfangsstation abgemeldet worden ist, so dass ein frei gewordenes Kommunikationsgerät oder eine frei gewordene Kommunikationsvorrichtung mit einer anderen Kommunikationsvorrichtung oder einem anderen Kommunikationsgerät assoziiert werden kann.

Weiterhin ist es vorteilhaft, wenn bei dem erfindungsgemäßen Verfahren ein Übertragen des Assoziationssignals einer Kommunikationsvorrichtung oder eines Kommunikationsgerätes durch eine Bedienprozedur, beispielsweise durch Drücken einer Taste oder Tastenkombination oder über einen Menüeinstieg, hervorgerufen wird. Dadurch ist es möglich, dass die Assoziierung auch nachträglich, nach der erfolgten Anmeldung stattfinden kann. Dies kann beispielsweise sinnvoll sein, wenn die Assoziation zwischen einem Kommunikationsgerät und einer Kommunikationsvorrichtung gelöst werden soll, um beispielsweise das Kommunikationsgerät mit einer anderen Kommunikationsvorrichtung zu assoziieren.

Es ist vorteilhaft, wenn bei dem erfindungsgemäßen Verfahren das Assoziationssignal durch eine Bedienprozedur, beispielsweise das Drücken einer Taste oder einer Tastenkombination oder über einen Menüeinstieg, an der Sende- und Empfangsstation hervorgerufen wird. Dadurch ist es möglich, dass die Assoziation des Kommunikationsgerätes mit der Kommunikationsvorrichtung später und/oder nachträglich durchgeführt wird.

Bevorzugt ist bei dem erfindungsgemäßen Verfahren die Nachrichteninformation der Sende-und Empfangsstation derart ausgestaltet, dass das mindestens eine Kommunikationsgerät oder die mindestens eine Kommunikationsvorrichtung die zur Assoziation zur Verfügung stehende Kommunikationsvorrichtung oder das zur Assoziation zur Verfügung stehende Kommunikationsgerät über eine Kommunikationsvorrichtungs-Wähleinheit auswählt. Die Nachrichteninformation kann ein digitales Signal, ein akustisches Signal und/oder ein optisches Signal und/oder ein Auswahlmenü sein. Durch ein akustisches Signal wird einem Benutzer eines Kommunikationsgerätes oder einer Kommunikationsvorrichtung ohne Display mitgeteilt, dass die Sende- und Empfangsstation mindestens eine Nachrichteninformation übermittelt hat. Dabei kann das akustische Signal beispielsweise ein Piepton oder eine Frage sein. Durch Betätigen einer Bedienprozedur, beispielsweise durch das Drücken einer Taste oder Tastenkombination, kann der Benutzer ein Assoziations-Bestätigungssignal zur Assoziation mit der zur Assoziation zur Verfügung stehenden Kommunikationsvorrichtung oder dem zur Assoziation zur Verfügung stehenden Kommunikationsgerät an die Sende- und Empfangsstation senden. Ein optisches Signal kann bei einem displaylosen Kommunikationsgerät oder bei einer displaylosen Kommunikationsvorrichtung beispielsweise ein Lämpchen oder ein Aufleuchten der Telefontastatur sein, um dem Benutzer des Kommunikationsgerätes oder der Kommunikationsvorrichtung mitzuteilen, dass die Sende- und Empfangsstation eine Nachrichteninformation übermittelt hat. Falls das Kommunikationsgerät oder die Kommunikationsvorrichtung über ein Display verfügt, kann das optische Signal beispielsweise ein Icon im Display sein. Bei einem Auswahlmenü wird das gesamte Display des Kommunikationsgerätes oder der Kommunikationsvorrichtung ausgefüllt. Beispielsweise fordert das Kommunikationsgerät oder die Kommunikationsvorrichtung durch Anzeige der Frage "Kommunikationsvorrichtung mit dem Kommunikationsgerät verbinden?" den Benutzer aktiv auf der Assoziation mit der zur Assoziation zur Verfügung stehenden Kommunikationsvorrichtung oder dem zur Assoziation zur Verfügung stehenden Kommunikationsgerät zu zustimmen. Über die Kommunikationsvorrichtungs-Wähleinheit ist es auch auf einfache Weise möglich, der Sende- und Empfangsstation mitzuteilen, dass das Kommunikationsgerät die Assoziation von der assoziierten Kommunikationsvorrichtung lösen möchte.

Bevorzugter Weise ist bei dem erfindungsgemäßen Verfahren das mit der Kommunikationsvorrichtung zu assozierende Kommunikationsgerät aus einer Gruppe von Kommunikationsgeräten auswählbar, wobei jedes Kommunikationsgerät sein eigenes zuordnungsbares Assoziations-Bestätigungssignal aufweist, wobei diese jeweils einen zuordnungsbaren Erkennungscode, beispielsweise die International Portable Equipment Identifier (IPEI) und/oder die International Portable User Identity (IPUI), aufweisen.

Weiterhin ist es vorteilhaft, wenn bei dem erfindungsgemäßen Verfahren die mit dem Kommunikationsgerät zu assoziierende Kommunikationsvorrichtung aus einer Gruppe von Kommunikationsvorrichtungen auswählbar ist, wobei jede Kommunikationsvorrichtung ihr eigenes zuordnungsbares Assoziations-Bestätigungssignal aufweist, wobei diese jeweils einen zuordnungsbaren Erkennungscode, beispielsweise die International Portable Equipment Identifier (IPEI) und/oder die International Portable User Identity (IPUI), aufweisen.

In einer bevorzugten Ausführungsform des erfindungsgemäßen Verfahrens weist die Sende-und Empfangsstation einen Speicher auf. Die Sende- und Empfangsstation verarbeitet die Assoziationssignale der zur Assoziation zur Verfügung stehenden Kommunikationsvorrichtungen und der zur Assoziation zur Verfügung stehenden Kommunikationsgeräte und die Assoziations-Bestätigungssignale der Kommunikationsgeräte und der Kommunikationsvorrichtungen in einem Prozessor und bringt die jeweils ausgewählte Kommunikationsvorrichtung mit dem jeweils ausgewählten Kommunikationsgerät in Verbindung und legt die entsprechenden Assoziationsinformation im Speicher ab. Auf diese Weise wird die Assoziationsinformation, umfassend das Assoziations-Bestätigungssignal und das Assoziationssignal, zwischen dem Kommunikationsgerät und der Kommunikationsvorrichtung von der Sende- und Empfangsstation verwaltet und gespeichert.

Weiterhin betrifft die Erfindung ein System aus einer Kommunikationsvorrichtung, einem Kommunikationsgerät und einer Sende- und Empfangsstation, wobei die Kommunikationsvorrichtung, welche über eine Schnittstelle, beispielsweise eine DECT-Schnittstelle, einer Sende- und Empfangsstation zuordenbar ist, wobei die Kommunikationsvorrichtung zur Durchführung des erfindungsgemäßen Verfahrens eingerichtet ist.

Vorteilhafterweise kann der Benutzer der Kommunikationsvorrichtung durch eine erste Bedienprozedur, beispielsweise Drücken einer Taste oder Tastenkombination, an der Kommunikationsvorrichtung ein von dem assoziierten Kommunikationsgerät geführten Gesprächs übernehmen, ohne dass am Kommunikationsgerät eine Übergabeprozedur, beispielsweise Drücken einer Taste oder Tastenkombination, betätigt wird, oder das Kommunikationsgerät eine Übergabe an die Kommunikationsvorrichtung initiiert. Dadurch kann eine einfache Übertragung des Gespräches von dem Kommunikationsgerät auf die Kommunikationsvorrichtung erreicht werden, und der Gesprächspartner wird sofort von der Kommunikationsvorrichtung übernommen, ohne in einer Warteschleife zu warten. Ferner kann durch die erste Bedienprozedur das Gespräch an dem Kommunikationsgerät nach Übernahme durch die Kommunikationsvorrichtung beendet werden, so dass das Gespräch nur über die Kommumkarionsvorrichtung stattfindet. Durch eine zweite Bedienprozedur, beispielsweise Drücken einer Taste oder Tastenkombination, welche gleich der ersten Bedienprozedur sein kann, an der Kommunikationsvorrichtung kann das Gespräch zurück an das Kommunikationsgerät übertragen werden.

Weiterhin vorteilhaft wird ein Verfahren zur Übernahme eines an einem Kommunikationsgerät geführtes Gespräch durch eine Kommunikationsvorrichtung zur Verfügung gestellt, bei welchem die Übernahme durch eine erste Bedienprozedur an der Kommunikationsvorrichtung erfolgen kann.

Es wird weiter vorteilhaft ein Verfahren zur Übergabe eines an einer Kommunikationsvorrichtung geführtes Gespräch an ein Kommunikationsgerät zur Verfügung gestellt, bei welchem die Übergabe an das Kommunikationsgerät durch eine zweite Bedienprozedur erfolgt, welche gleich der ersten Bedienprozedur sein kann.

Ein Ausfuhrungsbeispiel der Erfindung wird anhand Fig. 1 bis 2 erläutert. Es zeigen:
Fig. 1 schematisch den Anmeldevorgang der Kommunikationsvorrichtung H an die Sende-und Empfangsstation B, und
Fig. 2 schematisch, eine Kommunikationsvorrichtung H, welches über die Sende- und Empfangsstation B mit einem Kommunikationsgerät M verbunden ist.

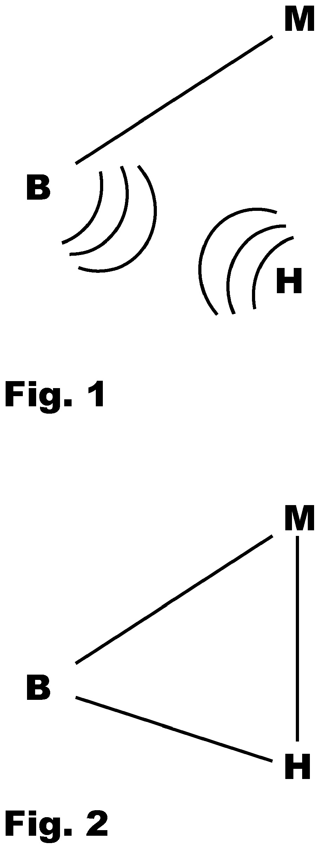

Fig. 1 zeigt eine Sende- und Empfangsstation B, welche mit einem Kommunikationsgerät M verbunden ist. Die Sende- und Empfangsstation B ist in Fig. 1 beispielsweise als Basisstation eines DECT-Schnurlostelefons ausgestaltet, wobei es sich beispielsweise um eine analoge oder ISDN-Schnurlostelefonanlage handeln kann, diese besitzt eine Schnittstelle, beispielsweise eine DECT-Schnittstelle, und ist über die Schnittstelle mit dem Kommunikationsgerät M, welches in diesem Beispiel ein DECT-Mobilteil eines DECT-Schnurlostelefons darstellen soll, kabellos verbunden. Die Verbindung der Sende- und Empfangsstation B mit dem Kommunikationsgerät M ist als eine durchgehende Linie dargestellt. Es wäre auch möglich, dass das Kommunikationsgerät M mit der Sende- und Empfangsstation B über eine Kabelverbindung verbunden ist.

In Fig. 1 ist ein verbundenes Kommunikationsgerät M dargestellt, jedoch ist es auch möglich, dass weitere Kommunikationsgeräte mit der Sende- und Empfangsstation B verbunden sind. Dies wird in Fig. 1 nicht dargestellt, wobei eine beliebige Anzahl an Kommunikationsgeräten mit der Sende- und Empfangsstation B verbunden sein können. Die weiteren mit der Sende-und Empfangsstation B verbundenen Kommunikationsgeräte könnten jeweils über eine Funkverbindung oder über eine Kabelverbindung verbunden sein.

Des Weiteren ist es auch möglich, dass bereits mindestens eine Kommunikationsvorrichtung mit der Sende- und Empfangsstation B verbunden ist. Dies ist in Fig. 1 nicht dargestellt.

Eine Kommunikationsvorrichtung H, beispielsweise ein Headset, eine Freisprechanlage oder ein Mobilteil, wird in einen Anmeldestatus versetzt und sendet dabei ein Anmeldesignal aus.

Das Aussenden des Anmeldesignals ist in Fig. 1 wellenförmig dargestellt. In dem vorliegenden Beispiel soll die Kommunikationsvorrichtung H kabellos mit der Sende- und Empfangsstation B verbunden werden. Es wäre auch möglich, dass die Kommunikationsvorrichtung H über eine Kabelverbindung mit der Sende- und Empfangsstation B verbunden wird.

Damit die Sende- und Empfangsstation B das Anmeldesignal der Kommunikationsvorrichtung H empfangen kann, wird die Sende- und Empfangsstation B ebenfalls in einen Anmeldestatus versetzt. Dieser Anmeldestatus wird über die DECT-Schnittstelle ausgesendet. In Fig. 1 ist der Anmeldestatus der Sende- und Empfangsstation B wellenförmig dargestellt.

Das Anmeldesignal der Kommunikationsvorrichtung H enthält einen zuordnungsbaren Erkennungscode, beispielsweise die IPEI oder die IPUI. Mit dem zuordnungsbaren Erkennungscode ist die Sende- und Empfangsstation B in der Lage zu erkennen, um welche Art von Gerät es sich handelt, und kann das Gerät anhand des zuordnungsbaren Erkennungscodes eindeutig identifizieren.

Selbstverständlich ist es auch möglich, dass sich ein Kommunikationsgerät M an der Sende-und Empfangsstation B anmeldet. Dies ist in Fig. 1 nicht dargestellt.

Sobald die Sende- und Empfangsstation B im Anmeldezustand über die DECT-Schnittstelle das Anmeldesignal der Kommunikationsvorrichtung H empfängt, übermittelt die Sende- und Empfangsstation B an das verbundene Kommunikationsgerät M, und wenn vorhanden an die ebenfalls mit der Sende- und Empfangsstation B verbundenen weiteren Kommunikationsgeräte mindestens eine Nachrichteninformation.

Selbstverständlich wäre es auch möglich, dass ein Kommunikationsgerät M sich an der Sende- und Empfangsstation B anmeldet, und die Sende- und Empfangsstation B mindestens eine Nachrichteninformation an die bereits verbundenen Kommunikationsvorrichtungen H, H₁ bis Hₙ übermittelt. Dies ist in Fig. 1 nicht dargestellt.

Die mindestens eine Nachrichteninformation weist ein Assoziationssignal, beispielsweise die DECT-Signalisierung wie z.B. die DECT IWU, die DECT IPUI ESC to PROPRIETARY usw., für eine Kommunikationsvorrichtung H oder ein Kommunikationsgerät M auf, welches durch die jeweilige Anmeldung an die Sende- und Empfangsstation B ausgelöst wird.

Es ist ebenfalls möglich, dass die Sende- und Empfangsstation B von sich aus die Nachrichteninformation erzeugt, ohne dass sich ein Kommunikationsgerät M oder eine Kommunikationsvorrichtung H an der Sende- und Empfangsstation B anmeldet. Dies ist in Fig. 1 ebenfalls nicht dargestellt.

Wenn das Kommunikationsgerät M mit der zur Assoziation zur Verfügung stehenden Kommunikationsvorrichtung H assoziiert werden soll, wählt der Benutzer über eine Kommunikationsvorrichtungs-Wähleinheit am Kommunikationsgerät M die zur Assoziation zur Verfügung stehenden Kommunikationsvorrichtung H aus. Dies ist in Fig. 1 ebenfalls nicht dargestellt.

Es ist auch möglich, dass wenn eine bereits verbundene Kommunikationsvorrichtung H mit einem zur Assoziation zur Verfügung stehenden Kommunikationsgerät M assoziiert werden soll, wählt der Benutzer über eine Kommunikationsvorrichtungs-Wähleinheit an der bereits verbundenen Kommunikationsvorrichtung H das zur Assoziation zur Verfügung stehende Kommunikationsgerät M aus. Dies ist in Fig. 1 ebenfalls nicht dargestellt.

Die durch die Sende- und Empfangsstation B übermittelte mindestens eine Nachrichteninformation kann ein digitales Signal, ein akustisches Signal, ein optisches Signal und/oder ein Auswahlmenü sein

Bei einem akustischen Signal kann einem Benutzer eines Kommunikationsgerätes M oder einer Kommunikationsvorrichtung H ohne Display durch beispielsweise einem Piepton oder über eine Frage mitgeteilt werden, dass die Sende- und Empfangsstation B mindestens eine Nachrichteninformation übermittelt hat. Durch eine Bedienprozedur, beispielsweise Drücken einer Taste oder einer Tastenkombination, kann der Benutzer ein Assoziations-Bestätigungssignal zur Assoziation mit der zur Assoziation zur Verfügung stehenden Kommunikationsvorrichtung H oder dem zur Assoziation zur Verfügung stehenden Kommunikationsgerät M an die Sende- und Empfangsstation B senden.

Bei einem optischen Signal kann bei einem displaylosen Kommunikationsgerät M oder einer displaylosen Kommunikationsvorrichtung H beispielsweise ein Lämpchen oder die Telefontastatur aufleuchten, um dem Benutzer des Kommunikationsgerätes M oder der Kommunikationsvorrichtung H mitzuteilen, dass die Sende- und Empfangsstation B mindestens eine Nachrichteninformation übermittelt hat. Falls das Kommunikationsgerät M oder die Kommunikationsvorrichtung H über ein Display verfügt, kann das optische Signal beispielsweise ein Icon im Display sein. Auch in diesem Fall kann durch eine Bedienprozedur, beispielsweise Drücken einer Taste oder einer Tastenkombination, der Benutzer ein Assoziations-Bestätigungssignal zur Assoziation mit der zur Assoziation zur Verfügung stehenden Kommunikationsvorrichtung H oder dem zur Assoziation zur Verfügung stehenden Kommunikationsgerät M an die Sende- und Empfangsstation B senden.

Bei einem Auswahlmenü wird das gesamte Display des Kommunikationsgerätes M oder der Kommunikationsvorrichtung H ausgefüllt. Beispielsweise fordert das Kommunikationsgerät M oder die Kommunikationsvorrichtung H durch Anzeige der Frage "Kommunikationsvorrichtung mit dem Kommunikationsgerät verbinden?" den Benutzer aktiv auf der Assoziation mit der zur Assoziation zur Verfügung stehenden Kommunikationsvorrichtung H oder dem zur Assoziation zur Verfügung stehenden Kommunikationsgerät M zu zustimmen.

Desweiteren ist es möglich, dass die Kommunikationsvorrichtungs-Wähleinheit des Kommunikationsgerätes M oder der Kommunikationsvorrichtung H eine Kombination der oben beschriebenen Kommunikationsvorrichtungs-Wähleinheiten ist, beispielsweise könnte die Kommunikationsvorrichtungs-Wähleinheit eine Kombination aus einem akustischen Signal und einem Auswahlmenü sein.

Das Assoziations-Bestätigungssignal des Kommunikationsgerätes M oder der Kommunikationsvorrichtung H enthält wie das Anmeldesignal der zur Assoziation zur Verfügung stehenden Kommunikationsvorrichtung H oder des zur Assoziation zur Verfügung stehenden Kommunikationsgerätes M einen zuordnungsbaren Erkennungscode, beispielsweise die IPEI oder die IPU. Über diesen Erkennungscode, ist die Sende- und Empfangsstation in der Lage das zur Assoziation zur Verfügung stehende Kommunikationsgerät M oder die zur Assoziation zur Verfügung stehenden Kommunikationsvorrichtung H von den möglicherweise ebenfalls verbunden Kommunikationsgeräten oder den bereits verbundenen Kommunikationsvorrichtung zu unterscheiden.

Über die Kommunikationsvorrichtungs-Wähleinheit ist es auch möglich, die Assoziation eines Kommunikationsgerätes M mit einer Kommunikationsvorrichtung H zu lösen.

Die Sende- und Empfangsstation B empfängt das Assoziations-Bestätigungssignal des Kommunikationsgerätes M oder der Kommunikationsvorrichtung H. Dies ist in Fig. 1 nicht dargestellt.

Die Sende-und Empfangsstation B verfügt über einen Speicher und einen Prozessor, beide sind in Fig. 1 nicht dargestellt. In dem Prozessor werden die Anmeldesignal- und Assoziations-Bestätigungssignal-Daten zu Assoziationsinformationen verarbeitet und in dem Speicher der Sende- und Empfangsstation B gespeichert. Auf diese Weise verbleiben die Assoziationsinformationen zwischen der Kommunikationsvorrichtung H und dem Kommunikationsgerät M bei der Sende- und Empfangsstation B und werden nicht in der Kommunikationsvorrichtung H oder im Kommunikationsgerät M gespeichert.

In Fig. 2 wird schematisch dargestellt, wie ein Kommunikationsgerät M über die Sende- und Empfangsstation B mit der Kommunikationsvorrichtung H verbunden ist. Die Verbindung zwischen dem Kommunikationsgerät M und der Sende- und Empfangsstation B, und zwischen der Sende- und Empfangsstation B und der Kommunikationsvorrichtung H sind als durchgehende Linien dargestellt.

Zusätzlich ist eine durchgehende Linie zwischen dem Kommunikationsgerät M und der Kommunikationsvorrichtung H dargestellt. Diese durchgehende Linie soll verdeutlichen, dass die Kommunikationsvorrichtung H mit dem Kommunikationsgerät M assoziiert ist, und nur von diesem Kommunikationsgerät M verwendet werden kann. Es ist somit anderen Kommunikationsgeräten, welche ebenfalls mit der Sende- und Empfangsstation B verbunden sein können, dies wird in Fig. 2 nicht dargestellt, nicht möglich mit der Kommunikationsvorrichtung H zu kommunizieren. Des Weiteren ist es dem Kommunikationsgerät M nicht mehr möglich mit weiteren Kommunikationsvorrichtungen assoziiert zu werden, solange die Assoziation zwischen dem Kommunikationsgerät M und der Kommunikationsvorrichtung H besieht. Die Assoziationsinformationen zwischen der Kommunikationsvorrichtung H und dem Kommunikationsgerät M befinden sich dabei in dem nicht dargestellten Speicher der Sende-und Empfangsstation B. Die in der Sende- und Empfangsstation B gespeicherte Assoziationsinformation umfasst dabei das zuordnungsbare Anmeldesignal der Kommunikationsvorrichtung H und das zuordnungsbare Assoziations-Bestätigungssignal des Kommunikationsgerätes M, welche miteinander assoziiert sind. Somit ist es möglich, dass mehrere Kommunikationsvorrichtungen H und mehrere Kommunikationsgeräte M an einer Sende- und Empfangsstation B angemeldet sind, welche durch die Assoziationsinformationen eindeutig dem jeweiligen Assoziationspartner zugeordnet sind, und nur durch den jeweiligen Assoziationspartner verwendet werden können.

Selbstverständlich gilt das oben beschriebene auch, wenn anstatt einer Kommunikationsvorrichtung H ein Kommunikationsgerät M an der Sende- und Empfangsstation B angemeldet wird. Sobald eine bereits verbundene Kommunikationsvorrichtung H ein Assoziations-Bestätigungssignal an die Sende- und Empfangsstation B übermittelt, werden dadurch eine möglicherweise bestehende Assoziierung mit einem anderen bereits verbundenen Kommunikationsgerät aufgelöst, und die Sende- und Empfangsstation B legt die Assoziierungsinformation für das Kommunikationsgerät M und der Kommunikationsvorrichtung H im Speicher ab. Dies ist in Fig. 2 nicht dargestellt.

In einem nicht dargestellten Ausfuhrungsbeispiel kann die Kommunikationsvorrichtung H beispielsweise eine Schnurlose Freisprecheinrichtung sein, welche der Benutzer beispielsweise in seiner Hemdtasche mit sich herum trägt. Der Benutzer führt über ein Kommunikationsgerät M ein Gespräch und möchte, dass andere Personen dem Gespräch folgen und aktiv an dem Gespräch teilnehmen. Durch eine erste Bedienprozedur, beispielsweise Drücken einer Taste oder einer Tastenkombination oder Menüeinstieg, an der Kommunikationsvorrichtung H durch den Benutzer übernimmt die Kommunikationsvorrichtung H das Gespräch von dem Kommunikationsgerät M. Die Übernahme erfolgt ohne Bestätigung des Kommunikationsgerätes M und ohne eine Unterbrechung, so dass der Gesprächspartner direkt auf die Kommunikationsvorrichtung H übertragen wird, ohne dass der Gesprächspartner in einer Warteschleife wartet.

Die Übernahme des Gesprächs wird über die Sende- und Empfangsstation B ermöglicht. Die Sende- und Empfangsstation B empfängt das Signal der Kommunikationsvorrichtung H, welche durch die erste Bedienprozedur der Kommunikationsvorrichtung H ausgesendet wird. Dieses Signal kann beispielsweise den Erkennungscode der Kommunikationsvorrichtung H umfassen, so dass die Sende- und Empfangsstation B weiß, dass die Kommunikationsvorrichtung H ein Gespräch übernehmen möchte. Die Sende- und Empfangsstation B überprüft im internen Speicher den Erkennungscode der Kommunikationsvorrichtung H. Der Prozessor im inneren der Sende- und Empfangsstation B überprüft die gespeicherten Assoziationsinformationen und kann dadurch feststellen, welches Kommunikationsgerät M der Kommunikationsvorrichtung H zugeordnet ist. Die Sende- und Empfangsstation B überträgt dann das Gespräch des Kommunikationsgerätes M an die Kommunikationsvorrichtung H und beendet das Gespräch auf dem Kommunikationsgerät M, so dass das Gespräch nur noch auf der Kommunikationsvorrichtung H fortgeführt wird.

Durch eine zweite Bedienprozedur an der Kommunikationsvorrichtung H durch den Benutzer, welche der ersten Bedienprozedur entsprechen kann, ist es auch möglich, das Gespräch wieder an das Kommunikationsgerät M zurück zu übertragen.

Desweiteren kann das Übertragen des Assoziationssignals einer Kommunikationsvorrichtung H oder eines Kommunikationsgerätes M durch die Sende- und Empfangsstation B durch eine Bedienprozedur, beispielsweise durch Betätigen einer Taste oder einer Tastenkombination oder Menüeinstieg, hervorgerufen werden. Dadurch ist es möglich, dass die Assoziierung auch nachträglich, nach der erfolgten Anmeldung stattfinden kann. Dies kann beispielsweise sinnvoll sein, wenn die Assoziation zwischen einem Kommunikationsgerät M und einer Kommunikationsvorrichtung H gelöst werden soll, um beispielsweise das Kommunikationsgerät M mit einer anderen Kommunikationsvorrichtung zu assoziieren.

Ferner ist es möglich, dass das Aussenden der mindestens einen Nachrichteninformation, umfassend das Assoziationssignal, durch eine Bedienprozedur, beispielsweise Drücken einer Taste oder einer Tastenkombination oder Menüeinstieg, an der Sende- und Empfangsstation B ausgelöst wird. Damit ist es möglich ein Kommunikationsgerät M oder eine Kommunikationsvorrichtung H erst bei der Sende-und Empfangsstation B anzumelden, und später mit den bereits verbundenen Kommunikationsgeräten oder einer bereits verbundenen Kommunikationsvorrichtung zu assoziieren.

Weiterhin ist es möglich, dass die Sende- und Empfangsstation B den Aufforderung zur Assoziation von sich aus beendet, wenn nach einer definierten Zeit kein Assoziations-Bestätigungssignal von einem Kommunikationsgerät M, M₁ bis Mₙ oder von einer Kommunikationsvorrichtung H, H₁ bis Hₙ empfangen worden ist. Dabei kann beispielsweise eine Zeit von 0,5 bis 5 Minuten, vorzugsweise 1 bis 2 Minuten verstreichen, bevor die Sende- und Empfangsstation die Aufforderung zur Assoziation mit einer zur Assoziation zur Verfügung stehenden Kommunikationsvorrichtung H oder einem zur Assoziation zur Verfugung stehenden Kommunikationsgerät M abbricht.

## Patentansprüche

1. Verfahren zur simultanen Anmeldung und Assoziation einer Kommunikationsvorrichtung (H) mit einem Kommunikationsgerät (M) über eine Sende- und Empfangsstation (B), wobei mindestens ein Kommunikationsgerät bereits mit der Sende- und Empfangsstation (B) verbunden ist,
mit zumindest folgenden Schritten:
a) die Sende- und Empfangsstation (B) übermittelt mindestens eine Nachrichteninformation an das mindestens eine Kommunikationsgerät, wobei die mindestens eine Nachrichteninformation ein Assoziationssignal einer Kommunikationsvorrichtung (H) aufweist, wobei das Assoziationssignal durch die jeweilige Anmeldung der Kommunikationsvorrichtung (H) an die Sende- und Empfangsstation (B) ausgelöst wird,
b) eines der mindestens einen Kommunikationsgeräte (M) bestätigt die Assoziation durch Übermittlung eines Assoziations-Bestätigungssignals an die Sende-und Empfangsstation (B), und
c) die Sende- und Empfangsstation (B) speichert intern die Assoziation zwischen dem Kommunikationsgerät (M) und der Kommunikationsvorrichtung (H).

2. Verfahren nach Anspruch 1, **dadurch gekennzeichnet, dass** die mindestens eine Nachrichteninformation intern in der Sende- und Empfangsstation (B) erzeugbar ist.

3. Verfahren nach Anspruch 1, **dadurch gekennzeichnet, dass** ein Übertragen des Assoziationssignals einer Kommunikationsvorrichtung (H) oder eines Kommunikationsgerätes (M) durch eine Bedienprozedur hervorgerufen wird.

4. Verfahren nach Anspruch 1, **dadurch gekennzeichnet, dass** das Assoziationssignal durch eine Bedienprozedur der Sende- und Empfangsstation (B) hervorgerufen wird.

5. Verfahren nach einem der vorherigen Ansprüche, wobei die übermittelte Nachrichteninformation der Sende- und Empfangsstation (B) als ein digitales Signal, akustisches Signal, ein optisches Signal und/oder ein Auswahlmenü wiedergegeben wird.

6. Verfahren nach einem der vorherigen Ansprüche, **dadurch gekennzeichnet, dass** das mit der Kommunikationsvorrichtung (H) zu assoziierende Kommunikationsgerät (M) aus einer Gruppe von Kommunikationsgeräten auswählbar ist.

7. Verfahren nach einem der vorherigen Ansprüche, **dadurch gekennzeichnet, dass** die mit dem Kommunikationsgerät (M) zu assoziierende Kommunikationsvorrichtung (H) aus einer Gruppe von Kommunikationsvorrichtungen auswählbar ist.

8. Verfahren nach einem der vorherigen Ansprüche, wobei die Sende- und Empfangsstation (B) einen Speicher aufweist, in dem mindestens eine zuordenbare Assoziation ablegbar ist.

9. Verfahren nach Anspruch 8, **dadurch gekennzeichnet, dass** die mit dem Assoziations-Bestätigungssignal übermittelte Information eines der mindestens einen Kommunikationsgeräte (M) in der Sende- und Empfangsstation (B) als Assoziation zwischen dem Kommunikationsgerät (M) und der Kommunikationsvorrichtung (H) zuordenbar gespeichert wird.

10. System aus einer Kommunikationsvorrichtung (H), einem Kommunikationsgerät (M) und einer Sende- und Empfangsstation **dadurch gekennzeichnet, dass** die Kommunikationsvorrichtung (H) über eine Schnittstelle einer Sende- und Empfangsstation (B) zuordenbar ist, wobei die Kommunikationsvorrichtung (H) und die Sende- und Empfangsstation (B) zur Durchführung aller Schritte eines Verfahrens nach einem der Verfahrensansprüche 1 bis 9 eingerichtet sind.

11. System nach Anspruch 10, **dadurch gekennzeichnet, dass** die Kommunikationsvorrichtung (H) derart eingerichtet ist, um ein von dem Kommunikationsgerät (M) geführtes Gespräch durch eine erste Bedienprozedur zu übernehmen.

12. System nach Anspruch 11, **dadurch gekennzeichnet, dass** die Kommunikationsvorrichtung (H) derart eingerichtet ist, um durch eine zweite Bedienprozedur, die gleich der ersten Bedienprozedur sein kann, das Gespräch wieder an das Kommunikationsgerät (M) zurück zu übertragen.

## Claims

1. A method for simultaneously logging in and associating a communication device (H) with a communication unit (M) via a transceiver station (B), wherein at least one communication unit is already connected to the transceiver station (B),
comprising at least the following steps:
a) the transceiver station (B) transmitting at least one piece of message information to the at least one communication unit, wherein the at least one piece of message information includes an association signal of a communication device (H), wherein the association signal is triggered by the respective login of the communication device (H) sent to the transceiver station (B);
b) one of the at least one communication units (M) confirming the association by transmitting an association confirmation signal to the transceiver station (B); and
c) the transceiver station (B) internally storing the association between the communication unit (M) and the communication device (H).

2. The method according to claim 1, **characterized in that** the at least one piece of message information can be internally generated in the transceiver station (B).

3. The method according to claim 1, **characterized in that** a transmission of the association signal of a communication device (H) or of a communication unit (M) is caused by an operating procedure.

4. The method according to claim 1, **characterized in that** the association signal is caused by an operating procedure of the transceiver station (B).

5. The method according to any one of the preceding claims, wherein the transmitted piece of message information of the transceiver station (B) is rendered as a digital signal, an acoustic signal, an optical signal and/or a selection menu.

6. The method according to any one of the preceding claims, **characterized in that** the communication unit (M) to be associated with the communication device (H) can be selected from a group of communication units.

7. The method according to any one of the preceding claims, **characterized in that** the communication device (H) to be associated with the communication unit (M) can be selected from a group of communication devices.

8. The method according to any one of the preceding claims, wherein the transceiver station (B) includes a memory in which at least one assignable association can be stored.

9. The method according to claim 8, **characterized in that** the piece of information of one of the at least one communication units (M) transmitted together with the association confirmation signal is stored in the transceiver station (B) as an association assignable between the communication unit (M) and the communication device (H).

10. A system comprising a communication device (H), a communication unit (M) and a transceiver station, **characterized in that** the communication device (H) can be assigned via an interface to a transceiver station (B), wherein the communication device (H) and the transceiver station (B) are configured to carry out all the steps of a method according to any one of method claims 1 to 9.

11. The system according to claim 10, **characterized in that** the communication device (H) is configured to take on a call conducted by the communication unit (M) using a first operating procedure.

12. The system according to claim 11, **characterized in that** the communication device (H) is configured to transfer the call back to the communication unit (M) using a second operating procedure, which may be identical to the first operating procedure.

## Revendications

1. Procédé d'alerte et d'association simultanées d'un dispositif de communication (H) doté d'un appareil de communication (M) par le biais d'une station d'émission et de réception (B), où au moins un appareil de communication est déjà relié avec la station d'émission et de réception (B),
avec au moins les étapes suivantes :
a) la station d'émission et de réception (B) transmet au moins un message d'information à l'au moins un appareil de communication, où l'au moins un message d'information présente un signal d'association d'un dispositif de communication (H), où le signal d'association est effacé par l'alerte respective du dispositif de communication (H) à la station d'émission et de réception (B),
b) un des au moins un appareil de communication (M) confirme l'association par la transmission d'un signal d'association et de confirmation à la station d'émission et de réception (B), et
c) la station d'émission et de réception (B) stocke en interne l'association entre l'appareil de communication (M) et le dispositif de communication (H).

2. Procédé selon la revendication 1, **caractérisé en ce que** l'au moins un message d'information peut être généré en interne dans la station d'émission et de réception (B).

3. Procédé selon la revendication 1, **caractérisé en ce qu'**une transmission du signal d'association d'un dispositif de communication (H) ou d'un appareil de communication (M) est provoquée par une procédure de commande.

4. Procédé selon la revendication 1, **caractérisé en ce que** le signal d'association est provoqué par une procédure de commande de la station d'émission et de réception (B).

5. Procédé selon l'une des revendications précédentes, dans lequel le message d'information transmis est reproduit à la station d'émission et de réception (B) sous forme d'un signal numérique, d'un signal acoustique, d'un signal optique et/ou sous forme d'un menu de sélection.

6. Procédé selon l'une des revendications précédentes, **caractérisé en ce que** l'appareil de communication (M) à associer avec le dispositif de communication (H) peut être choisi dans un groupe d'appareils de communication.

7. Procédé selon l'une des revendications précédentes, **caractérisé en ce que** le dispositif de communication (H) à associer avec l'appareil de communication (M) peut être choisi dans un groupe de dispositifs de communication.

8. Procédé selon l'une des revendications précédentes, dans lequel la station d'émission et de réception (B) présente une mémoire dans laquelle au moins une association pouvant être attribuée peut être déposée.

9. Procédé selon la revendication 8, **caractérisé en ce que** l'information transmise avec le signal d'association et de confirmation est stockée pouvant être attribuée à un des au moins un appareil de communication (M) dans la station d'émission et de réception (B) sous forme d'association entre l'appareil de communication (M) et le dispositif de communication (H).

10. Système à base d'un dispositif de communication (H), d'un appareil de communication (M) et d'une station d'émission et de réception, **caractérisé en ce que** le dispositif de communication (H) peut être associé à une station d'émission et de réception (B) par le biais d'une interface, où le dispositif de communication (H) et la station d'émission et de réception (B) sont installés pour l'exécution de toutes les étapes d'un procédé selon l'une des revendications de procédé 1 à 9.

11. Système selon la revendication 10, **caractérisé en ce que** le dispositif de communication (H) est installé de manière à prendre en compte une conversation menée par l'appareil de communication (M) par une procédure de commande.

12. Système selon la revendication 11, **caractérisé en ce que** le dispositif de communication (H) est installé de manière à transmettre en retour, à l'appareil de communication (M), la conversation, par une seconde procédure de commande qui peut être identique à la première procédure de commande.
